(19) Europäisches Patentamt
European Patent Office
Office européen des brevets

(11) **EP 3 821 307 B1**

(12) **EUROPÄISCHE PATENTSCHRIFT**

(45) Veröffentlichungstag und Bekanntmachung des Hinweises auf die Patenterteilung:
**30.08.2023  Patentblatt 2023/35**

(21) Anmeldenummer: **19736669.3**

(22) Anmeldetag: **03.07.2019**

(51) Internationale Patentklassifikation (IPC):
**G05B 19/4093** (2006.01)

(52) Gemeinsame Patentklassifikation (CPC):
**G05B 19/40937;** B23C 3/00; G05B 2219/34175;
Y02P 90/02

(86) Internationale Anmeldenummer:
**PCT/EP2019/067869**

(87) Internationale Veröffentlichungsnummer:
**WO 2020/011623 (16.01.2020 Gazette 2020/03)**

(54) **FRÄSVERFAHREN**

MILLING METHOD

PROCÉDÉ DE FRAISAGE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.07.2018  DE 102018116553**

(43) Veröffentlichungstag der Anmeldung:
**19.05.2021  Patentblatt 2021/20**

(73) Patentinhaber: **Exeron GmbH**
**78727 Oberndorf a. N. (DE)**

(72) Erfinder: **MAYER, Joachim**
**78727 Oberndorf a. N. (DE)**

(74) Vertreter: **Wetzel, Fritz**
**Black-IP Legal**
**Arnoldstraße 8**
**85402 Kranzberg (DE)**

(56) Entgegenhaltungen:
**WO-A1-2017/056025**

- **ANONYMOUS: "Fräsen mit SINUMERIK -
Formenbau von 3- bis 5-Achsen Simultanfräsen",
IP.COM JOURNAL, IP.COM INC., WEST
HENRIETTA, NY, US, 23. November 2011
(2011-11-23), XP013148155, ISSN: 1533-0001**
- **"Fraesen mit hoher Praezision", TECHNISCHE
RUNDSCHAU, HALLWAG, BERN; CH, DE, Bd.
100, Nr. 15, 8. August 2008 (2008-08-08), Seiten
38-39, XP001513614, ISSN: 1023-0823**

## Beschreibung

### Technisches Gebiet

Die Erfindung betrifft ein Verfahren zur Bearbeitung eines Werkstückes mit einem Fräswerkzeug, das an einer drehbaren Spindel angeordnet ist, wobei die Spindel gegenüber dem Werkstück oder das Werkstück gegenüber der Spindel entlang eines Bearbeitungsweges verschoben wird und die Spindel dabei um eine Spindelachse rotiert, wobei eine Drehzahl und/oder eine Phasenlage der Rotation der Spindel entlang des Bearbeitungsweges gesteuert wird sowie eine Vorrichtung und ein Computerprogramm zur Durchführung des Verfahrens und eine Datenstruktur zur Kodierung des Computerprogramms.

### Stand der Technik

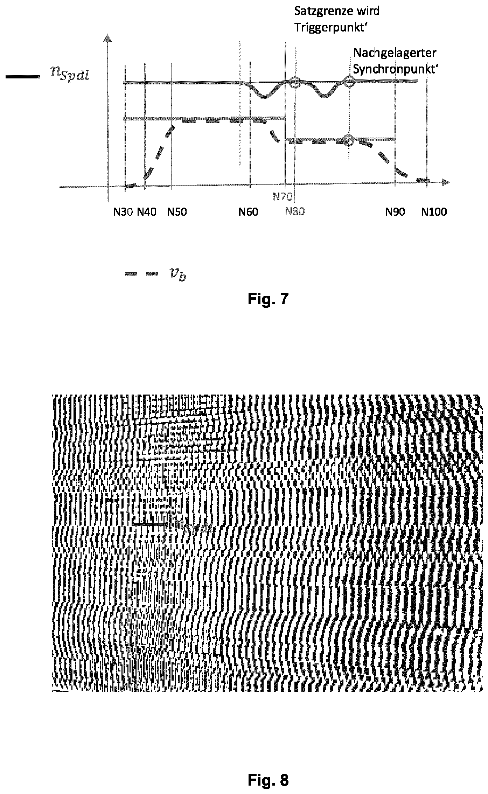

In modernen Werkzeugmaschinen werden Numerische Steuerungen eingesetzt, um die Positionierung und Bewegung von Werkzeugen relativ zu einem Werkstück zu kontrollieren. Um ein Werkstück entsprechend einer Vorgabe zu bearbeiten, ist es notwendig, das Werkzeug relativ zum Werkstück auf vorher festgelegten Bahnen zu bewegen. Man spricht daher auch von einer Bahnsteuerung. Die Festlegung der gewünschten Bahnen erfolgt in einem Teileprogramm, das durch die Numerische Steuerung abgearbeitet wird. Die Numerische Steuerung setzt dabei die geometrischen Anweisungen des Teileprogramms in Anweisungen an die Lageregelung der verschiedenen Vorschubachsen der Werkzeugmaschine um. Die das Werkzeug antreibende Frässpindel wird beim Fräsprozess in der Regel mit einer technologisch bedingten, konstanten Drehzahl betrieben, die im Teileprogramm vorgegeben wird. (S-Wort nach DIN 66025). Ebenso wird im Teileprogramm für das Werkzeug eine Bahngeschwindigkeit programmiert (F-Wort nach DIN 66025), die sich in der Regel auf den TCP (tool center point) oder auf die Stelle des Werkzeugeingriff am Werkzeug bezieht.
Gattungsgemäße Fräsverfahren sind beispielsweise aus der DE 10 2015 112 577 A1, der DE 10 2010 060 220 A1, der WO 2017/056025 A1, der "Fräsen mit SINUMERIK - Formenbau von 3- bis 5- Achsen Simultanfräsen" oder der JP 2017-001153 A1 bekannt.
Werden frästechnisch hergestellte Oberflächen durch "Abzeilen" hergestellt, so gibt es eine Vielzahl von Gründen, weshalb in auf dem Werkstück benachbarten Fräsbahnen die Schneideneingriffe des Werkzeugs mehr oder weniger beliebig in ihrer Phasenlage zueinander verschoben sind. Beispielsweise ist die Spindellage nicht exakt mit dem Bahnvorschub gekoppelt (z.B. bei drehzahlgeregelter Spindel) oder das Bahnlängenintegral in benachbarten Fräsbanen ist kein Vielfaches des Zahnvorschubs (Versatz selbst bei gegebener Lagekoppelung zwischen Vorschubachsen und Spindel).
Zudem tritt eine Variation des Vorschubes auf, beispielsweise im Eilgang für eine Positionierungen oder Vorschubabsenkung bei der Umkehr, Diese bedeuten -bei konstanter Spindeldrehzahl- das Verlassen der Synchronität zwischen Bahnparameter und Spindellage. Beim Wiedererreichen eines programmierten Vorschubs ist die Winkellage der Spindel praktisch zufällig.
Im Ergebnis zeigen Fräswerkstücke, die nach dem Stand der Technik hergestellt sind, typischerweise unregelmäßige zeilenförmige Oberflächenstrukturen wie in Figur 8 gezeigt auf. In Figur 8 verlaufen die Fräsbahnen von links nach rechts. Zu erkennen ist, wie die Eingriffspunkte der Werkzeugschneiden in benachbarten Fräsbahnen zufällig synchron sind. Immer wieder ergeben sich aber auch Verschiebungen, die dann zu einem optisch ungleichmäßigen Aussehen (breitere Streifen) der Oberfläche führen. Bei Werkzeugen zum Spritzgießen oder dergleichen kann sich diese Struktur auf das Endprodukt übertragen.

### Offenbarung der Erfindung

### Technische Aufgabe

Eine Aufgabe der Erfindung ist es, ein Verfahren anzugeben, das es ermöglicht, in benachbarten Fräsbahnen gezielt eine Phasenlage der Werkzeugschneideneingriffe herzustellen. Dadurch soll insbesondere eine Verbesserung der Oberflächengüte bewirkt werden.

### Technische Lösung

Dieses Problem wird durch ein Verfahren nach Anspruch 1 gelöst. Das oben genannte Problem wird insbesondere gelöst durch ein Verfahren zur Bearbeitung eines Werkstückes mit einem Fräswerkzeug, das an einer drehbaren Spindel angeordnet ist, wobei die Spindel gegenüber dem Werkstück oder das Werkstück gegenüber der Spindel entlang eines Bearbeitungsweges verschoben wird und die Spindel dabei um eine Spindelachse rotiert, wobei eine Drehzahl und/oder eine Phasenlage der Rotation der Spindel entlang des Bearbeitungsweges gesteuert wird und wobei der Bearbeitungsweg zeilenförmige parallele Bahnen umfasst. Der Bearbeitungsweg umfasst zeilenförmig nebeneinander angeordnete parallele Bahnen und die Phasenlage der Spindel ist entlang des Bearbeitungsweges in benachbarten Bahnen gleich oder im Wesentlichen gleich. Durch die gleiche Phasenlage ist das durch den Fräsvorgang in die Oberfläche eingebrachte Muster in benachbarten Bahnen gleich, sodass optisch der Eindruck einer gleichmäßig bearbeiteten Fläche entsteht. Die Oberflächenbeschaffenheit erlaubt es daher, auf ein Polieren der Oberfläche verzichten zu können.
Die Phasenlage wird durch Variation der Drehzahl der Spindel und/oder der Vorschubgeschwindigkeit der Spindel gegenüber dem Werkstück entlang des Bearbeitungsweges gesteuert.
Die Drehzahl und/oder die Phasenlage wird in einer Ausführungsform der Erfindung entlang des Bearbeitungsweges an mindestens einem Synchronpunkt auf einen vorgegebenen Sollwert gesteuert.

Die Drehzahl und/oder die Phasenlage wird in einer Ausführungsform der Erfindung entlang des Bearbeitungsweges an mehreren Synchronpunkten auf einen jeweils vorgegebenen Sollwert gesteuert.

Vor Erreichen eines Synchronpunktes wird in einer Ausführungsform der Erfindung an einem Triggerpunkt mit der Steuerung von Drehzahl und Phasenlage auf den Sollwert begonnen.

Die Phasenlage wird in einer Ausführungsform der Erfindung durch Absenken oder Erhöhen der Spindeldrehzahl gesteuert. So kann ohne Veränderung des Vorschubes allein durch Regelung der Spindeldrehzahl die Phasenlage der Spindel gesteuert werden.

Die Phasenlage wird in einer Ausführungsform der Erfindung durch Absenken oder Erhöhen der Vorschubgeschwindigkeit der Spindel gegenüber dem Werkstück entlang des Bearbeitungsweges gesteuert. Bei dieser Variante wird ein Eingriff in den Vorschub zur Synchronisierung der Phasenlage verwendet.

Die Phasenlage ist bei einem Fräswerkzeug mit mehreren Schneiden in einer Ausführungsform der Erfindung um ein Vielfaches der Teilung der Schneiden verschoben. Statt auf volle Umdrehungen der Spindel abzustellen, also den Winkel im Bereich 0° bis 360° (bzw. Winkel modulo 360°), wird auf einzelne Schneiden hin synchronisiert. Weist der Fräskopf beispielsweise 10 Schneiden auf, so kann die Synchronisierung alle 36° (360°/10) erfolgen.

Das eingangs genannte Problem wird auch gelöst durch eine Vorrichtung zur Durchführung eines Verfahrens nach einem der vorhergehenden Ansprüche, wobei diese Mittel zur Verschiebung eines Werkstücks relativ zu einem an einer Spindel angeordneten Fräswerkzeug sowie Mittel zur Drehzahlsteuerung und Phasensteuerung der Rotation der Spindel umfasst.

Die Spindel wird in einer Ausführungsform der Erfindung durch einen lagegeregelten Elektromotor angetrieben. Die Vorrichtung umfasst in einer Ausführungsform der Erfindung Mittel zur Bestimmung der Winkelstellung der Spindel.

Das eingangs genannte Problem wird auch gelöst durch ein Computerprogramm zur Ausführung eines erfindungsgemäßen Verfahrens sowie eine Datenstruktur zur Kodierung eines Computerprogramms zur Ausführung eines erfindungsgemäßen Verfahrens.

## Kurze Beschreibung der Zeichnungen

Ausführungsbeispiele der Erfindung werden nachfolgend anhand der beiliegenden Zeichnungen näher erläutert. Dabei zeigen:

Figur 1 Skizze eines Geschwindigkeitsgrenzwertprofils als Ergebnis der Bahnplanung,

Figur 2 Skizze eines Geschwindigkeitsgrenzwertprofils als Anschmiegung an das Grenzwertprofil von unter her,

Figur 3 Skizze einer Abtastung des Bahngeschwindigkeitsprofils im Interpolationstakt,

Figur 4 Skizze zur gemeinsamen Abtastung des Bahngeschwindigkeitsprofils und eines Spindel-Geschwindigkeitsprofils im Interpolationstakt,

Figur 5 Skizze zum Phasenausgleich der Spindel auf eine Satzgrenze hin,

Figur 6 Skizze zum Phasenausgleich durch zeitlich begrenzten Absenkung des Vorschub Niveaus auf eine Satzgrenze hin,

Figur 7 Skizze zum nachgelagerten Phasenausgleich bei dynamisch nicht möglicher Trajektorienplanung zur programmierten Satzgrenze,

Figur 8 Skizze einer Oberfläche eines Fräswerkstückes hergestellt mit einem Fräsverfahren nach Stand der Technik.

## Ausführungsformen der Erfindung

NC-Programme beschreiben die Fräsbahn in einer Sequenz einfacher Geometrieelemente. (Bahn-) Stützpunkte oder Bahnstützpunkte sind die jeweiligen Grenzen zwischen zwei aufeinander folgenden Geometrieelementen. Diese Koordinaten werden dem NC-Programm pro Zeile als NC-Satz entnommen. Der Bahnparameter (auch als Bahnlängenintegral bezeichnet) beschreibt genau einen Punkt auf der im Teileprogramm beschriebenen Bahn, der durchaus zwischen den Stützpunkten der NC-Sätze liegen kann

Als Synchronpunkt wird nachfolgend ein beliebiger Punkt der Bahn (=Bahnparameter) verstanden, an dem gleichzeitig gilt:

$nS_{pdl} = n_{prog}$ (die Drehzahl der Spindel ist auf dem im Programm vorgegebenen Wert)

$v_b = vp_{rog}$ (die Vorschubgeschwindigkeit ist auf dem im Programm vorgegebenen Wert)

$\varphi_{Spdl} = \varphi_{prog}$ (die Winkellage (Phase) der Spindel ist auf dem im Programm vorgegebenen Wert)

$aS_{pdl} = 0$ (die Spindeldrehzahl ist konstant)

$a_b = 0$ (die Spindel wird translatorisch in x, y, z Richtung nicht beschleunigt)

Unter einem Triggerpunkt wird hier der Beginn (in Zeit und/oder Bahnparameter) für die Planung eines Bewegungsprofils auf einen Synchronpunkt hin.

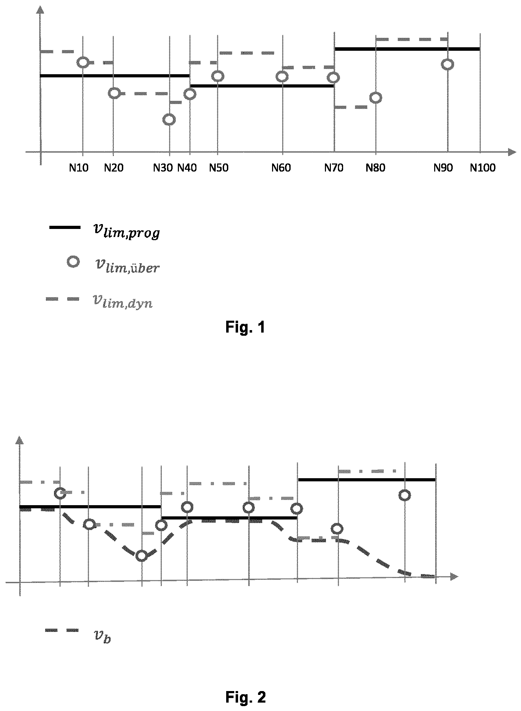

Mit dem programmieren eines Vorschubs und einer Spindeldrehzahl in einem NC-Programm einer CNC-Steuerung wird ein technologisch bedingter Zahnvorschub durch festgelegt. Aufgabe einer jeden CNC ist es, im Grundsatz, diesen programmierten (Wunsch- bzw. Maximal-) Vorschub, unter Einhaltung der dynamischen Grenzwerte der beteiligten Achsen möglichst genau einzuhalten ohne diesen Maximalwert zu überschreiten. In Bereichen von Bahnkrümmungen muss das Vorschubniveau abgesenkt werden um die Achsvorschubantriebe nicht dynamisch zu überfordern oder auch um gewisse Anforderungen an die Bahngenauigkeit einzuhalten. Realisiert wird dies durch die Vorausberechnung eines sog. Geschwindigkeitsgrenzwertprofils im Rahmen der sog. Bahnplanung, wie dies in Figur 1 gezeigt ist.

Jede Programmzeile ist in Figur 1 sowie im folgenden Text in Anlehnung an Din/Iso bzw. G-Code mit N10, N20 und so fort bis N100 bezeichnet. Für jede Programmzeile wird durch eine CNC Steuerung nach Stand der Technik eine Maximalgeschwindigkeit des Vorschubes als Geschwindigkeitsgrenzwertprofil der Bahnplanung ermittelt. Das Geschwindigkeitsgrenzwertprofil enthält den im NC-Programm programmierten Vorschub bzw. Die Vorschubgeschwindigkeit $v_{lim, prog}$ sowie als Ergebnis der Bahnverlaufsanalyse die dynamisch bedingten Maximalwerte für die Bahngeschwindigkeit innerhalb des Satzes $v_{lim, dyn}$ sowie die maximale Übergangsgeschwindigkeit pro Satzübergang $v_{lim, über}$.

Aufgabe des nachgelagerten, sog. Geschwindigkeitsprofilgenerators ist es, ein Geschwindigkeitsprofil über dem Bahnparameter (oder der Zeit, je nach Implementierung) zu berechnen, das sich den Minimalwerten des Grenzwertprofils von unten her, also von geringeren Werten, da der Maximalwert ja nicht überschritten warden darf, durch tangentenstetige Geschwindigkeitsverläufe auf möglichst hohem Niveau anschmiegt, dabei aber das Grenzwertprofil an keiner Stelle überschreitet. Wird eine Darstellung über der Zeit gewählt, so ergeben sich für das Geschwindigkeitsprofil Polynomsegmente 2. Ordnung, deren Segmentgrenzen im allgemeinsten Fall weder exakt auf einer Satzgrenze noch auf einem Zeitpunkt der später durch den Interpolator abgetastet wird, liegen, wie dies in Figur 2 dargestellt ist. Die Geschwindigkeit $v_B$ ist an jeder Stelle unterhalb der in Figur 1 dargestellten Werte von $v_{lim, prog}$, $v_{lim,dyn}$ sowie $v_{lim, über}$.

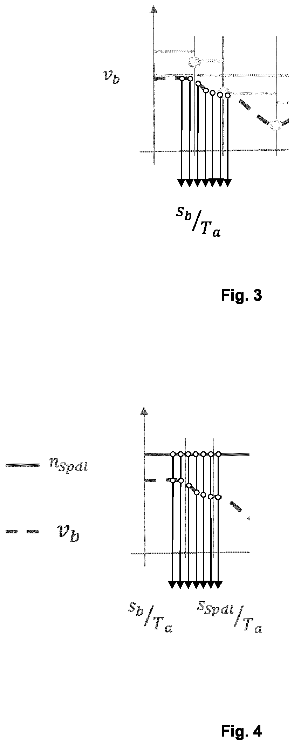

Abschließend wird das so vorausgerechnete Geschwindigkeitsprofil vom sog. Abtastinterpolator in der Zykluszeit des sog. Interpolationstakes als IPO-Abtastpunkte abgetastet und die Lagesollwerte für sämtliche an der Bewegung beteiligten Vorschubachsen berechnet. Dadurch ergibt sich auch, dass nicht jeder NC-Stützpunkt exakt als Lagesollwert an den Achsregler ausgegeben wird, weil die exakte NC-Satzgrenze im allgemeinsten Fall zwischen zwei IPO-Abtastpunkten zu liegen kommt. Die Abtastung ist schematisch in Figur 3 dargestellt. Mit einem Zeitintervall $T_a$ warden Lagewerte $s_b$ durch entsprechende Wegsensoren aller Achsen ermittelt und an die Steuerung weitergegeben.

Die zuvor dargestellte Ermittlung des Geschwindigkeitsprofils und die sich daraus ergebende Steuerung der Vorschübe aller Achsen sind aus dem Stand der Technik bekannt.

Der Drehzahlverlauf einer lagegeregelten Spindel wird erfindungsgemäß über dem Bahnverlauf ermittelt und gesteuert. Zudem wird der Winkel (Phase) der Spindel an bestimmten Stellen auf einen vorgegebenen Wert gesteuert. Eine grafische Darstellung lehnt sich an die des Bahngeschwindigkeitsprofils an.

Die Geschwindigkeit einer lagegeregelten Spindel kann erfindungsgemäß, wie ein Bahngeschwindigkeitsprofil in derselben Darstellung eines Geschwindigkeitsplans über dem Bahnparameter (oder der Zeit) wie in Figur 4 dargestellt abgebildet werden. Die zyklischen Lagesollwerte können dann von beiden Profilen zeitgleich abgetastet werden.

Durch ein solches Verfahren ist jedem interpolierten Bahnpunkt exakt eine Spindelorientierung (d. h. ein Winkel der Spindel relativ zu einem Nullpunkt; eine Phase der Rotation der Spindel) zugeordnet. Insbesondere herrscht in den Bereichen konstanten Bahnvorschubs und konstanter Spindeldrehzahl eine "Quasi-Getriebe-Synchronität" zwischen Spindeldrehzahl und Bahngeschwindigkeit. Allerdings besteht in dem Zustand der exakten Geschwindigkeitskopplung zwischen Spindel und Bahn für die Spindel noch der Freiheitsgrad der Spindelorientierung in Bezug zum Bahnlängenintergral, der mathematisch als Integrationskonstante aufgefasst werden kann. Erfindungsgemäß wird dieser Freiheitsgrad mit Zielparametern versehen (=programmiert) und unter Einhaltung der Dynamikgrenzen zeitoptimal hergestellt.

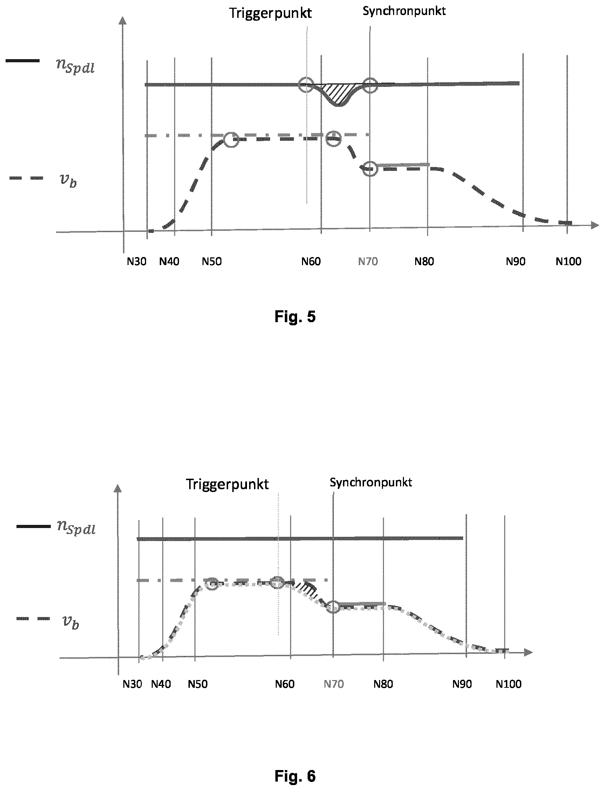

Für die Versorgung mit den Zielparametern wird an mindestens einem Punkt auf der Bahn eine exakte Spindelorientierung zugeordnet. Erfindungsgemäß findet diese Zuordnung besonders Vorteilhaft im NC-Programm statt. Die Programmierung einer solchen Synchronisationsbedingung führt mindestens (Fig. 5) einmal pro benachbart liegender Fräsbahn zu einer festgelegten Spindelorientierung. Bei gegebenen Synchronisationsbefehlen, besteht die Aufgabe des erfindungsgemäßen Verfahrens zunächst darin, zu ermitteln ob eine Trajektorienplanung unter Einhaltung der Dynamikgrenzwerte möglich ist. Für den Fall, dass eine Trajektorienplanung möglich ist, werden nachfolgend zwei mögliche Verfahren zur Herstellung der Synchronität beschrieben. Darüber hinaus wird ein Verfahren angegeben wie vorteilhaft mit dem Fall umgegangen werden kann, dass eine Trajektorienplanung nicht möglich ist.

Für die weiteren Ausführungen werden als gegeben, (oder zunächst herzustellende Systemeigenschaften des CNC Steuerungssystems) vorausgesetzt: Erfindungsgemäß wird einem bestimmten geometrischen Ort auf der Bahn eine an dieser Stelle gewünschte Spindel-Winkellage zugeordnet. In Ausführungsbeispielen der Erfindung wird dies realisiert, indem im CNC Programm ein zusätzlicher (ggf. zur reinen Bahnbeschreibung redundanter) NC-Satz Stützpunkt dem Teileprogramm hinzufügt wird. Hier ein Beispiel für eine (von vielen denkbaren) Syntaxerweiterung eines DIN/ISO gemäßen NC Programms, diese ist in Zeile N40 mit "G119 S77" eingefügt und dort als Kommentar erläutert:

```
N10 M03 S1000
N20 G00 X-110 Y0 Z10
N30 G01 Z-1 F2000
N40 G01 X-100 G119 S77; an der Position X-100
soll die Spindel auf 77° stehen
N50 G01 X+100
```

Die Syntaxerweiterung stellt einen Befehl G119 zur Verfügung, der einen Parameter S mit der Angabe einer Winkellage der Spindel relativ zu einem Nullpunkt (Phasenlage) erwartet.

Dadurch entsteht bei konstantem Vorschub und konstanter Spindeldrehzahl eine "Quasi-Getriebe-Synchronität" zwischen dem Bahnlängenintegral und der Winkellage der Frässpindel. Diese Forderung ist in der Praxis wohl am Vorteilhaftesten durch einen lagegeregelten Betrieb der Frässpindel zu gewährleisten.

Unter der Randbedingung der Einhaltung der Begrenzungen der drei Ableitungen des Weges nach der Zeit (vmax, amax, jmax) für alle Vorschubachsen sowie die Frässpindel, existiert für jeden Bewegungszustand der Bahnachsen und der Frässpindel eine minimal erforderliche Zeitdauer (und mithin auch ein Mindestweg auf der Fräsbahn) der erforderlich ist, um einen Synchronpunkt zu erreichen. Umgekehrt bedeutet das, dass es physikalisch nicht möglich ist, jeden beliebigen Synchronisierungswunsch in beliebig kurzer Zeit oder Weg herzustellen. Deshalb muss das zu beschreibende Verfahren auch erläutern, was in solchen Fällen passiert.

Im Gegensatz zu linearen Vorschubachsen, interessiert für die vorliegende Aufgabenstellung die kumulierte Position der Frässpindel seit Beginn deren Bewegung nicht. Vielmehr interessieren lediglich die Winkellagen innerhalb des 0..360° Modulo Bereichs. Das heißt der maximal erforderliche Phasenausgleich für die Frässpindel zur Erreichung des Synchronisationsziels beträgt:

$$\Delta\varphi max = +/- \; 180° \; / \; Anz. \; Schneiden$$

Eine weitere Besonderheit für den lagegeregelten Betrieb von Spindeln mit Sollwertvorgabe im Modulobereich liegt drin, dass jede Sollposition auf zwei Arten erreicht werden kann (vorwärts oder rückwärts drehend.) Ist die Information über die Drehrichtung bekannt, so funktioniert die Lagevorgabe bis zu 360° / TA. Sprich, bei einem Interpolationstakt von 1ms bis zu 60.000 Umdr./min Spindeldrehzahl.

Wenn die Trajektorienplanung möglich ist, können zwei Verfahren angewandt werden.

Bei einem ersten Verfahren erfolgt ein phasenausgleich durch die Spindel Aus der Definition eines Synchronpunktes ergibt sich, dass Synchronpunkte nur an solchen geometrischen Orten auf der Bahn (Bahnparameter) liegen können, in denen eine konstante Vorschubgeschwindigkeit zustande kommt. Per Definition des oben erläuterten Anschmiegungsproblems können solche Synchronpunkte genau dann exakt auf einer Satzgrenze zu liegen kommen, wenn der Brems-oder Beschleunigungsweg auf der Bahn ausreicht, um bei Satzeintritt zusätzlich zu vb = vprog, auch die Bedingung ab = 0 einzuhalten und wenn dieser Brems-oder Beschleunigungsweg bzw. dessen Dauer zusätzlich ausreichend ist, um den erforderlichen Phasenausgleich der Spindel herzustellen.

Ein solcher Fall wird in der nachfolgenden Darstellung aufgezeigt:

```
........N10 M03 S1000:
:
N30 G00 X5 Y0 Z-5 F2000
N40 G00 X10 Y10 Z-1
N50 G00 X15 Y5
N60 G01 X85
N70 G01 X100 Y90 Z-2 F1500 G119 S77;Spindel
auf 77° synchronisieren
N80 G01 X150
```

Die einzelnen Programmzeilen sind wie zuvor mit N10, N20 und so fort bezeichnet. Die Programmzeile N70 enthält neben dem Bahnweg zu X=100, Y=90 bei einer Tiefenposition Z=-2 und einer Vorschubgeschwindigkeit von 2000 die Information, dass die Spindel dort einen Winkel von 77° einnehmen soll.

Die schaffierte Fläche in Figur 5 ist das Geschwindigkeit-Zeit-Integral, das der erforderlichen Phasenkorrektur der Spindelposition entspricht. Eingekreist sind die jeweiligen Segmentgrenzen der Geschwindigkeitsprofile. Für diesen Fall ist das Verfahren ohne Beeinflussung der Vorschubplanung zeitoptimal und gänzlich ohne negativen Einfluss auf die Gesamtbearbeitungszeit des Teileprogramms. Zur Berechnung des Synchronisationsvorganges ist wie folgt vorzugehen: Nachdem im Look-Ahead Puffer ein (neuer) NC-Satz mit Orientierungsbedingung für die Spindel aufgefunden wird, wird -ähnlich wie wenn ein "normaler" neuer NC-Satz herein kommt- zusätzlich zum Bahngeschwindigkeitsprofil das Spindeldrehzahlprofil neu durchgerechnet.

Da der Look-Ahead Prozess mit der Geschwindigkeitsprofilgenerierung im Interpolator in Echtzeit läuft, ist der im letzten Takt an die Spindel ausgegebene Lagesollwert bekannt, ebenso der exakte Bahnparameter und somit auch die Dauer (in Bahn-Fahrweg und Zeit) bis zum Erreichen des Synchronpunktes. Damit kann die Winkelstellung der Spindel am Synchronpunkt berechnet werden, wenn ohne Korrektur der Spindeldrehzahl weitergefahren würde. Der erforderliche Betrag des Phasenausgleichs ist dann die Differenz dieser beiden Winkelpositionen im Modulokreis. Für den Fall von mehrschneidigen Werkzeugen, kann der erforderliche Phasenausgleich natürlich auch auf Winkelpositionen 360°/Anz Schneiden verkürzt werden. Mit Kenntnis der dynamischen Grenzwerte der Spindel lässt sich dann ein Spindel-Drehzahl-Profil errechnen, das den Synchronpunkt genau zur Satzgrenze herstellt Sollte der Bahnvorschub (wie in unserem Bespiel) während der Phasenkorrektur der Spindel nicht konstant sein, so ist es wichtig, dass der Synchronisierungsvorgang der Spindel exakt an der Satzgrenze endet.

Bei einem zweiten Ausführungsbeispiel des erfindungsgemäßen Verfahrens erfolgt der phasenausgleich durch zeitlich begrenzte Absenkung des Vorschub Niveaus, siehe Figur 6.

Das Verfahren zur zeitlich begrenzten Absenkung des Vorschubniveaus des Geschwindigkeitsprofils ist insbesondere bei schnelllaufenden Spindeln effizient. Die erforderliche Höhe und Dauer der Vorschubabsenkung fallen gering aus weil die Spindel im Bereich von Millisekunden praktisch jede Winkelposition einnimmt, ohne die Spindeldrehzahl zu variieren. Zur Berechnung des Synchronisationsvorganges wird wie folgt vorgegangen: Die erforderliche Phasenkorrekturbetrag wird zunächst wie im vorgenannten Verfahren ermittelt. Nach der Berechnung der erforderlichen Phasenkorrektur bis zum Synchronpunkt wird ein modifiziertes Stück Geschwindigkeitsprofil auf den Synchronpunkt hin so berechnet, dass der Bewegungsabschnitt genau soviel zusätzliche Zeit (gegenüber der ursprünglichen Planung) benötigt, wie die Spindel zum Überstreichen der erforderlichen Phasenkorrektur benötigt.

Eine Trajektorienplanung ist immer dann unmöglich, wenn Weg, bzw. Zeit nicht ausreichen, um eine Trajektorie zu finden. Das erfindungsgemäße Verfahren sieht für einen solchen Fall vor, einen nachgelagerten Synchronpunkt zu ermitteln, der auf der Bahn eine gewisse Distanz ... d vom programmierten Synchronpunkt (nachgelagert) entfernt ist. Die gewählte Distanz ... d ist dabei ein ganzzahliges Vielfaches des geplanten Zahnvorschubes, der aus dem S und F Wort bekannt ist. Das S Wort steuert die Spindeldrehzahl, das F Wort die Vorschubgeschwindigkeit. Damit kommt eine Synchronität der Werkzeugschneideneingriffe zwar verspätet, aber immer noch definiert zu einem im NC-Programm programmierten geometrischen Ort zustande. Bei gut gefülltem Look-ahead Puffer und nicht allzu eng aufeinander folgenden NC-Sätzen mit Synchronbedingung dürfte dieser Fall in der Praxis eher selten oder gar nicht zum Tragen kommen. Am leichtesten ließe er sich mit zu eng aufeinander folgenden NC-Sätzen mit Synchronbedingung "provozieren". Ein solcher Fall wird in der nachfolgenden Darstellung exemplarisch aufgezeigt: Bei einem programmierten Vorschubniveau gibt es keine Möglichkeit binnen der Distanz von X 0,1mm die Orientierung der Spindel unter Einhaltung der Dynamikgrenzwerte um 64° zu ändern, siehe dazu Figur 7;

........N10 M03 S1000:

```
N30 G00 X5 Y0 Z-5 F2000
N40 G00 X10 Y10 Z-1
N50 G00 X15 Y5
N60 G01 X85
N70 G01 X100 Y90 Z-2 F1500 G119 S77;Spindel
auf 77° synchronisieren
N80 G01 X100,1 Y90 Z-2 G119 S13;Spindel auf 13°
synchronisieren
N90 G01 X150
```

**Formelzeichen:**

$s$ Lage, Position, Weg
$v$ Geschwindigkeit
$a$ Beschleunigung
$j$ Ruck
$\varphi$ Winkellage
$n$ Drehzahl
TA Interpolations Zykluszeit (IPO-Takt)

**Indizes:**

$b$ Bahn, Werte die sich auf die NC-Bahn beziehen
$Spdl$ Spindel, Werte die sich auf die Bahn beziehen
$prog$ (im NC-Programm) programmierter Wert

**Patentansprüche**

1. Verfahren zur Bearbeitung eines Werkstückes mit einem Fräswerkzeug, das an einer drehbaren Spindel angeordnet ist, wobei die Spindel gegenüber dem Werkstück oder das Werkstück gegenüber der Spindel entlang eines Bearbeitungsweges verschoben wird und die Spindel dabei um eine Spindelachse rotiert, wobei eine Drehzahl und/oder eine Phasenlage der Rotation der Spindel entlang des Bearbeitungsweges gesteuert wird, **dadurch gekennzeichnet, dass** der Bearbeitungsweg zeilenförmige parallele Bahnen umfasst und die Phasenlage der Spindel entlang des Bearbeitungsweges in benachbarten Bahnen im Wesentlichen gleich ist, wobei die Phasenlage durch Variation der Drehzahl der Spindel und/oder der Vorschubgeschwindigkeit der Spindel gegenüber dem Werkstück entlang des Bearbeitungsweges gesteuert wird.

2. Verfahren nach Anspruch 1, **dadurch gekennzeichnet, dass** die Drehzahl und/oder die Phasenlage entlang des Bearbeitungsweges an mindestens einem Synchronpunkt auf einen vorgegebenen Sollwert gesteuert wird.

3. Verfahren nach Anspruch 2, **dadurch gekenn-**

zeichnet, dass die Drehzahl und/oder die Phasenlage entlang des Bearbeitungsweges an mehreren Synchronpunkten auf einen jeweils vorgegebenen Sollwert gesteuert wird.

4. Verfahren nach Anspruch 2 oder 3, **dadurch gekennzeichnet, dass** vor Erreichen eines Synchronpunktes an einem Triggerpunkt mit der Steuerung von Drehzahl und Phasenlage auf den Sollwert begonnen wird.

5. Verfahren einem der vorhergehenden Ansprüche, **dadurch gekennzeichnet, dass** die Phasenlage durch Absenken oder Erhöhen der Spindeldrehzahl gesteuert wird.

6. Verfahren nach einem der vorhergehenden Ansprüche, **dadurch gekennzeichnet, dass** die Phasenlage durch Absenken oder Erhöhen der Vorschubgeschwindigkeit der Spindel gegenüber dem Werkstück entlang des Bearbeitungsweges gesteuert wird.

7. Verfahren nach einem der vorhergehenden Ansprüche, **dadurch gekennzeichnet, dass** die Phasenlage bei einem Fräswerkzeug mit mehreren Schneiden um ein Vielfaches der Teilung der Schneiden verschoben ist.

8. Vorrichtung zur Durchführung eines Verfahrens nach einem der vorhergehenden Ansprüche, **dadurch gekennzeichnet, dass** diese Mittel zur Verschiebung eines Werkstücks relativ zu einem an einer Spindel angeordneten Fräswerkzeug sowie Mittel zur Drehzahlsteuerung und Phasensteuerung der Rotation der Spindel umfasst.

9. Vorrichtung nach Anspruch 8, **dadurch gekennzeichnet, dass** die Spindel durch einen lagegeregelten Elektromotor angetrieben wird.

10. Vorrichtung nach Anspruch 8 oder 9, **dadurch gekennzeichnet, dass** diese Mittel zur Bestimmung der Winkelstellung der Spindel umfasst.

11. Computerprogramm zur Ausführung eines Verfahrens nach einem der Ansprüche 1 bis 7.

12. Datenstruktur zur Kodierung eines Computerprogramms zur Ausführung eines Verfahrens nach einem der Ansprüche 1 bis 7.

**Claims**

1. Method for machining a workpiece with a milling tool arranged on a rotatable spindle, wherein the spindle is moved relative to the workpiece or the workpiece is moved relative to the spindle along a machining path and the spindle rotates about a spindle axis, wherein a rotational speed and/or a phase position of the rotation of the spindle along the machining path is controlled, **characterized in that** the machining path comprises linear parallel paths and the phase position of the spindle along the machining path is substantially the same in adjacent paths, the phase position being controlled by varying the rotational speed of the spindle and/or the feed rate of the spindle relative to the workpiece along the machining path.

2. Method according to claim 1, **characterized in that** the rotational speed and/or the phase position along the processing path is controlled to a predetermined desired value at at least one synchronous point.

3. Method according to claim 2, **characterized in that** the rotational speed and/or the phase position along the processing path is controlled at several synchronous points to a respectively predetermined desired value.

4. Method according to claim 2 or 3, **characterized in that** before reaching a synchronization point at a trigger point, the control of speed and phase position to the setpoint value is started.

5. Method one of the preceding claims, **characterized in that** the phase position is controlled by decreasing or increasing the spindle speed.

6. Method according to one of the preceding claims, **characterized in that** the phase position is controlled by decreasing or increasing the feed rate of the spindle with respect to the workpiece along the machining path.

7. Method according to one of the preceding claims, **characterized in that** the phase position of a milling tool with several cutting edges is shifted by a multiple of the pitch of the cutting edges.

8. Apparatus for carrying out a process according to one of the preceding claims, **characterized in that** it comprises means for displacing a workpiece relative to a milling tool arranged on a spindle, and means for controlling the speed and phase of rotation of the spindle.

9. Device according to claim 8, **characterized in that** the spindle is driven by a positioncontrolled electric motor.

10. Device according to claim 8 or 9, **characterized in that** it comprises means for determining the angular position of the spindle.

**11.** Computer program for carrying out a procedure according to one of claims 1 to 7.

**12.** Data structure for encoding a computer program for executing a process according to one of claims 1 to 7.

**Revendications**

**1.** Procédé d'usinage d'une pièce avec un outil de fraisage qui est disposé sur une broche rotative, la broche étant déplacée par rapport à la pièce ou la pièce étant déplacée par rapport à la broche le long d'un trajet d'usinage et la broche tournant alors autour d'un axe de broche, une vitesse de rotation et/ou une position de phase de la rotation de la broche le long du trajet d'usinage étant commandées, **caractérisé en ce que** le trajet d'usinage comprend des trajectoires parallèles en forme de lignes et la position de phase de la broche le long du trajet d'usinage est sensiblement la même dans des trajectoires adjacentes, la position de phase étant commandée en faisant varier la vitesse de rotation de la broche et/ou la vitesse d'avance de la broche par rapport à la pièce à usiner le long du trajet d'usinage.

**2.** Procédé selon la revendication 1, **caractérisé en ce que** la vitesse de rotation et/ou la position de phase le long de la trajectoire d'usinage est commandée à une valeur de consigne prédéterminée en au moins un point de synchronisation.

**3.** Procédé selon la revendication 2, **caractérisé en ce que** la vitesse de rotation et/ou la position de phase le long du trajet d'usinage sont commandées en plusieurs points de synchronisation à une valeur de consigne prédéfinie respective.

**4.** Procédé selon la revendication 2 ou 3, **caractérisé en ce qu'**avant d'atteindre un point de synchronisation à un point de déclenchement, on commence à commander la vitesse de rotation et la position de phase à la valeur de consigne.

**5.** Procédé selon l'une des revendications précédentes, **caractérisé en ce que** la position de phase est commandée en diminuant ou en augmentant la vitesse de rotation de la broche.

**6.** Procédé selon l'une quelconque des revendications précédentes, **caractérisé en ce que** la position de phase est commandée en abaissant ou en augmentant la vitesse d'avance de la broche par rapport à la pièce le long du trajet d'usinage.

**7.** Procédé selon l'une des revendications précédentes, **caractérisé en ce que**, dans le cas d'un outil de fraisage à plusieurs arêtes de coupe, la position de phase est décalée d'un multiple du pas des arêtes de coupe.

**8.** Dispositif pour la mise en oeuvre d'un procédé selon l'une des revendications précédentes, **caractérisé en ce qu'**il comprend des moyens de déplacement d'une pièce par rapport à un outil de fraisage monté sur une broche, ainsi que des moyens de contrôle de la vitesse de rotation et de la phase de la rotation de la broche.

**9.** Dispositif selon la revendication 8, **caractérisé en ce que** la broche est entraînée par un moteur électrique à régulation de position.

**10.** Dispositif selon la revendication 8 ou 9, **caractérisé en ce qu'**il comprend des moyens de détermination de la position angulaire de la broche.

**11.** programme d'ordinateur pour la mise en oeuvre d'un procédé selon l'une quelconque des revendications 1 à 7.

**12.** Structure de données pour le codage d'un programme d'ordinateur pour l'exécution d'un procédé selon l'une quelconque des revendications 1 à 7.

N10 N20 N30 N40 N50 N60 N70 N80 N90 N100

——— $v_{lim,prog}$

○ $v_{lim,über}$

‒ ‒ $v_{lim,dyn}$

**Fig. 1**

‒ ‒ $v_b$

**Fig. 2**

$v_b$

$s_b / T_a$

**Fig. 3**

$n_{Spdl}$

$v_b$

$s_b / T_a$    $s_{Spdl} / T_a$

**Fig. 4**

Triggerpunkt    Synchronpunkt

$n_{Spdl}$

$v_b$

N30  N40    N50           N60    N70    N80        N90    N100

**Fig. 5**

Triggerpunkt    Synchronpunkt

$n_{Spdl}$

$v_b$

N30  N40    N50           N60    N70    N80        N90    N100

**Fig. 6**

Satzgrenze wird
Triggerpunkt'

Nachgelagerter
Synchronpunkt'

$n_{Spdl}$

N30 N40  N50          N60      N70  N80                    N90   N100

$v_b$

**Fig. 7**

**Fig. 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015112577 A1
- DE 102010060220 A1
- WO 2017056025 A1
- JP 2017001153 A